# EUROPÄISCHE PATENTANMELDUNG

(11) **EP 2 551 008 A1**
(43) Veröffentlichungstag der Anmeldung: **30.01.2013**
(21) Anmeldenummer: 12004992.9
(22) Anmeldetag: 05.07.2012
(51) Int. Cl.: B01D 53/14, C01B 3/52

(54) **Verfahren und Vorrichtung zur Waschmittelregenerierung in Gaswäschen**

(30) Priorität: 26.07.2011 DE 102011108530
(71) Anmelder: Linde Aktiengesellschaft, 80331 Munich (DE)
(72) Erfinder: Kerestecioglu, Ulvi, 82269 Geltendorf (DE); Weiss, Horst, 81375 München (DE)

(57) **Zusammenfassung**

Die Erfindung betrifft ein Verfahren sowie eine Vorrichtung zur Regenerierung eines Waschmittels (21), das bei erhöhtem Druck in einer physikalischen Gaswäsche zur Reinigung eines Wasserstoff und Kohlenmonoxid enthaltenden Einsatzgases (1) eingesetzt und dabei mit Kohlendioxid und Schwefelkomponenten beladen wird. Das mit Kohlendioxid und Schwefelkomponenten beladene Waschmittel (21) wird auf einen Druck zwischen 0,4 und 1,7bar(a), bevorzugt zwischen 1,0 und 1,3bar(a) entspannt (j,B) und bei der Entspannung freigesetztes kohlendioxidreiches, Schwefelkomponenten enthaltendes Gas (23) wird verdichtet (V2) und in eine Waschkolonne (W) eingeleitet, in der Schwefelkomponenten aus dem kohlendioxidreichen Gas mit Hilfe von schwefelfreiem Waschmittel (18) ausgewaschen werden.

## Beschreibung

Die Erfindung betrifft ein Verfahren zur Regenerierung eines Waschmittels, das bei erhöhtem Druck in einer physikalischen Gaswäsche zur Reinigung eines Wasserstoff und Kohlenmonoxid enthaltenden Einsatzgases eingesetzt und dabei mit Kohlendioxid und Schwefelkomponenten beladen wird sowie eine Vorrichtung zur Durchführung des Verfahrens.

Physikalische Gaswäschen nutzen die Eigenschaft von Flüssigkeiten aus, gasförmige Stoffe zu absorbieren und in Lösung zu halten, ohne die Gase dabei chemisch zu binden. Wie gut ein Gas von einer Flüssigkeit absorbiert wird, wird durch den Löslichkeitskoeffizienten ausgedrückt: je besser sich das Gas in der Flüssigkeit löst, desto größer ist sein Löslichkeitskoeffizient. Der Löslichkeitskoeffizient steigt i.Allg. mit fallender Temperatur.

Die ausgewaschenen Gaskomponenten werden im Anschluss an die Gaswäsche aus dem beladenen Waschmittel entfernt, wodurch das Waschmittel regeneriert wird. Das regenerierte Waschmittel wird normalerweise wieder in der Gaswäsche eingesetzt, während die ausgewaschenen Gaskomponenten entweder entsorgt oder einer wirtschaftlichen Verwertung zugeführt werden.

Um Wasserstoff und Kohlenmonoxid in großtechnischem Maßstab zu gewinnen, werden nach dem Stand der Technik Kohlenstoff enthaltende Einsatzstoffe durch Vergasung in ein Syntheserohgas umgesetzt. Ein derartiges Syntheserohgas enthält neben den erwünschten Bestandteilen Wasserstoff und Kohlenmonoxid auch eine Reihe von unerwünschten Bestandteilen, wie Kohlendioxid (CO₂) Schwefelwasserstoff (H₂S) und Kohlenoxidsulfid (COS). Zur Abtrennung der unerwünschten von den erwünschten Bestandteilen wird das Syntheserohgas vorzugsweise einer physikalischen Gaswäsche unterzogen. Ein solches Verfahren bietet sich hierfür an, da die Syntheserohgase heute meist unter hohem Druck erzeugt werden und die Wirksamkeit einer physikalischen Gaswäsche in erster Näherung linear mit dem Betriebsdruck zunimmt. Von besonderer Bedeutung für die Reinigung von Syntheserohgasen ist die Methanolwäsche. Sie nützt die Tatsache aus, dass die Löslichkeitskoeffizienten der unerwünschten Bestandteile in tiefkaltem Methanol um mehrere Größenordnungen größer sind als diejenigen von H₂ und CO. Da die Löslichkeitskoeffizienten von Kohlendioxid und der Schwefelkomponenten H2S und COS mit sinkender Temperatur stark zunehmen, wird das Methanolwaschmittel zumeist mit einer Temperatur, die weit unterhalb von 0°C liegt, in eine Absorberkolonne eingeleitet und mit dem zu reinigenden Synthesegas in intensiven Kontakt gebracht. Das mit unerwünschten Bestandteilen beladene Methanol wird nach dem Waschvorgang regeneriert und wieder in den Waschprozess zurückgeführt.

Zur Regenerierung wird das beladene Methanolwaschmittel nach dem Stand der Technik aus der Absorberkolonne abgezogen und einer sog. Anreicherungskolonne, bei der es sich um eine Strippkolonne handelt, in deren oberem Bereich aufgegeben. In der Anreicherungskolonne wird durch ein im Gegenstrom geführtes Strippgas, bei dem es sich meist um Stickstoff handelt, vorwiegend CO₂ aus dem Methanolwaschmittel ausgetrieben, wodurch sich die Schwefelkomponenten anreichern. Die bei der CO₂-Austreibung erzeugte Kälte wird dazu genutzt, die unvermeidlichen Kälteverluste einer Methanolwäsche zu verringern.

Das vom Kopf der Anreicherungskolonne abgezogene, vorwiegend aus CO₂ und Strippgas bestehende Gasgemisch kann i.Allg. nicht wirtschaftlich genutzt werden, weshalb es nachfolgend entsorgt wird. Eine Art der Entsorgung besteht in der Freisetzung des Gasgemisches in die Atmosphäre, was jedoch im Hinblick auf die Erwärmung der Erdatmosphäre zunehmend als problematisch betrachtet wird. Vorstellbar ist auch die Verbringung des Gasgemisches in tiefe Erdschichten (Sequestrierung) oder seine Verwendung bei der Ausbeutung von Erdöllagerstätten (Enhanced Oil Recovery). Hierfür ist jedoch sein Stickstoffgehalt auf niedrige Werte von weniger als ca. 4mol% begrenzt, so dass sich der Einsatz von Stickstoff als Strippgas, wie er gegenwärtig üblich ist, verbietet.

Aufgabe der vorliegenden Erfindung ist es daher, ein Verfahren der gattungsgemäßen Art sowie eine Vorrichtung zu deren Durchführung so auszugestalten, durch die die Nachteile des Standes der Technik überwunden werden.

Diese Aufgabe wird dadurch gelöst, dass mit Kohlendioxid und Schwefelkomponenten beladenes Waschmittel auf einen Druck zwischen 0,4 und 1,7bar(a), bevorzugt zwischen 1,0 und 1,3bar(a) entspannt und bei der Entspannung freigesetztes kohlendioxidreiches, Schwefelkomponenten enthaltendes Gas verdichtet und in eine Waschkolonne eingeleitet wird, in der Schwefelkomponenten aus dem kohlendioxidreichen Gas mit Hilfe von schwefelfreiem Waschmittel ausgewaschen werden.

Unter schwefelfreiem Waschmittel ist in diesem Zusammenhang ein Waschmittel zu verstehen, dessen Gehalt an Schwefelkomponenten geringer ist als 10ppm.

Das kohlendioxidreiche Gas wird sinnvollerweise in die untere Sektion der Waschkolonne eingeleitet und dort im Gegenstrom zu schwefelfreiem Waschmittel nach oben geführt. Bei dem schwefelfreien Waschmittel handelt es sich vorzugsweise um ein mit Kohlendioxid gesättigtes Waschmittel, das bei der Reinigung des bereits weitgehend von Schwefelkomponenten befreiten Einsatzgases gezielt mit Kohlendioxid beladen wird. Im kohlendioxidreichen Gas enthaltene Schwefelkomponenten werden durch das schwefelfreie Waschmittel absorbiert, während Kohlendioxid weitgehend in der Gasphase verbleibt.

Die Konzentration des im beladenen Waschmittel verbleibenden Kohlendioxids wird im Wesentlichen über den Druck bestimmt, auf den das Waschmittel entspannt wird. Durch die Entspannung auf Drücke nahe oder unterhalb des Umgebungsdruckes kann der Kohlendioxidgehalt des beladenen Waschmittels bis zu tiefsten Werten reduziert werden. Gleichzeitig kann das abgetrennte Kohlendioxid in der Waschkolonne in beliebiger Reinheit dargestellt und als Produkt abgegeben und beispielsweise zur Enhanced Oil Recovery verwendet werden.

Um die Wirtschaftlichkeit des Verfahrens zu erhöhen, kann es sinnvoll sein, das beladene Waschmittel in wenigstens zwei Schritten zu entspannen, so dass kohlendioxidreiches Gas auf zumindest zwei unterschiedlichen Druckstufen erzeugt wird und nur ein Teil des aus dem beladenen Waschmittel abgetrennten Kohlendioxids auf der niedrigsten Druckstufe vorliegt. Um die Gesamtmenge des abgetrennten Kohlendioxids auf einen einheitlichen, für die Einleitung in die Waschkolonne notwendigen Druck zu verdichten, ist daher ein geringerer Energieaufwand erforderlich als bei einstufiger Waschmittelentspannung.

Damit die bei der Verdichtung des kohlendioxid reichen Gases eingebrachte Wärme nur zu einem geringen Teil im Prozess durch teuere Fremdkälte auf tiefem Temperaturniveau kompensiert werden muss, wird vorgeschlagen, das kohlendioxid reiche Gas nach seiner Verdichtung und vor seiner Einleitung in die Waschkolonne zu kühlen. Zur Kühlung kann Kühlwasser oder Fremdkälte auf einem vergleichsweise hohen Temperaturniveau verwendet werden.

Grundsätzlich kann das erfindungsgemäße Verfahren zur Regenerierung eines beliebigen Waschmittels eingesetzt werden. Mit besonderem Vorteil wird es jedoch bei der Regenerierung von beladenem Methanol oder N-Methylpyrrolidon (NMP) oder Polyethylenglykoldimethylether (PEGE) verwendet.

Weiterhin betrifft die Erfindung eine Vorrichtung zur Regenerierung eines Waschmittels, das bei erhöhtem Druck in einer physikalischen Gaswäsche zur Reinigung eines Wasserstoff und Kohlenmonoxid enthaltenden Einsatzgases eingesetzt und dabei mit Kohlendioxid und Schwefelkomponenten beladen wird.

Die gestellte Aufgabe wird vorrichtungsseitig erfindungsgemäß dadurch gelöst, dass die Vorrichtung ein Drosselorgan sowie ein Entspannungsgefäß und eine Waschkolonne, die beide über einen Verdichter verbunden sind, umfasst, wodurch beladenes Waschmittel über das Drosselorgan in das Entspannungsgefäß entspannbar ist und bei der Entspannung freigesetztes Gas mit Hilfe des Verdichters verdichtet und in die Waschkolonne eingeleitet werden kann.

Eine zweckmäßige Ausgestaltung der Erfindung sieht vor, dass sie wenigstens zwei seriell angeordnete Entspannungsgefäße aufweist, wobei jeweils zwei benachbarte Entspannungsgefäße über ein Drosselorgan miteinander verbunden sind, so dass beladenes Waschmittel durch die Entspannungsgefäße geführt und dabei auf unterschiedliche Druckniveaus entspannt werden kann. Vorzugsweise wird zur Verdichtung der in den Entspannungsgefäßen gewinnbaren Gasströme ein Verdichter mit mehreren Verdichtersektionen eingesetzt, deren Anzahl gleich oder größer ist als die Anzahl der Entspannungsgefäße. Sinnvollerweise ist die Eintrittseite einer Verdichtersektion höchstens mit einem Entspannungsgefäß in einer Weise verbunden, dass Gas aus dem Entspannungsgefäß der Verdichtersektion zugeführt werden kann. Durch diese Konfiguration ist es möglich, die Verdichtung des bei der Entspannung freigesetzten Gases mit einem geringeren Energieaufwand durchzuführen, als dies bei einer einstufigen Entspannung möglich ist.

Falls die Druckdifferenz zwischen einem ersten Behälter, aus dem beladenes Waschmittel abgezogen werden kann, und einem zweiten Behälter in den das abgezogene Waschmittel über ein Drosselorgan entspannbar ist, nicht ausreicht, um über das Drosselorgan eine stabile Regelung des Anlagenbetriebs zu gewährleisten, sieht die Erfindung eine stromaufwärts des Drosselorgans angeordnete Pumpe vor, durch die der vor dem Drosselorgan herrschende Druck des beladenen Waschmittels angehoben werden kann. Alternativ oder zusätzlich kann auch der erste Behälter gegenüber dem zweiten Behälter und dem Drosselorgan nach oben versetzt angeordnet sein, so dass der hydrostatische Druck des Waschmittels vor dem Drosselorgan vergrößert werden kann.

Um den Einsatz von teuerer Fremdkälte auf tiefem Temperaturniveau zu minimieren bzw. um einen Teil der im Prozess benötigten Fremdkälte auf ein preiswert zu erzeugendes höheres Temperaturniveau anzuheben, sieht eine Ausgestaltung der Erfindung einen zwischen Verdichter und Waschkolonne angeordneten Wärmetauscher vor, über den verdichtetes Gas vor seiner Einleitung in die Waschkolonne beispielsweise mit Kühlwasser gekühlt werden kann.

Die Waschkolonne und das oder die Entspannungsgefäße können als separate Bauteile oder als bauliche Einheit ausgeführt sein.

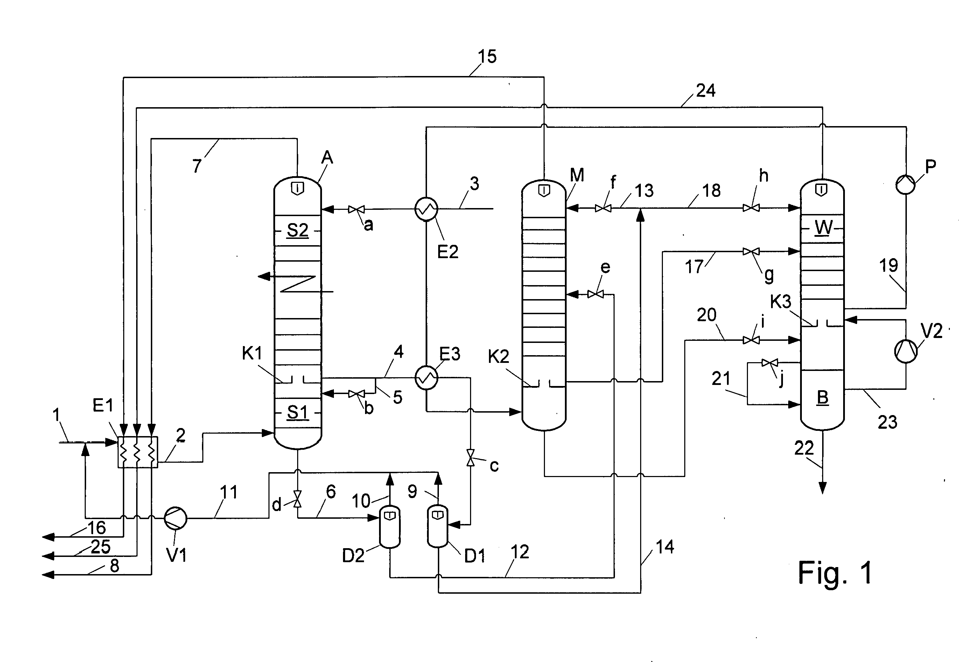

Im Folgenden soll die Erfindung anhand eines in der Figur 1 schematisch dargestellten Ausführungsbeispiels näher erläutert werden.

Die Figur 1 zeigt einen Ausschnitt aus einer physikalischen Gaswäsche, in der Kohlendioxid und Schwefelkomponenten aus einem Syntheserohgas mit Hilfe von flüssigem und tiefkaltem Methanol ausgewaschen werden.

Das zu waschende Syntheserohgas, das neben Wasserstoff und Kohlenmonoxid auch Kohlendioxid und Schwefelkomponenten enthält, wird über Leitung 1 in den Wärmetauscher E1 eingeleitet und dort gegen anzuwärmende Verfahrensströme abgekühlt, bevor es über Leitung 2 der Absorberkolonne A in ihrem unteren Bereich aufgegeben werden kann. Die Absorberkolonne A, die typischerweise bei einem Druck zwischen 15 und 80bar betrieben wird, weist eine untere S1 und eine obere Waschsektion S2 auf, die durch einen Kaminboden K1 voneinander getrennt sind. Das kalte Syntheserohgas wird in der Absorberkolonne A nach oben geleitet und dabei in intensiven Kontakt mit Methanolwaschmittel gebracht, das unbeladen über Leitung 3 in die Waschsektion S2 eingeleitet wird. Der Mengenstrom des Methanolwaschmittels wird über das Regelorgan a so eingestellt, dass Kohlendioxid weitgehend vollständig bzw. bis zu einem gewünschten Grad aus dem Syntheserohgas ausgewaschen wird. Über die Leitungen 4 und 5 sowie das Regelorgan b wird bereits mit Kohlendioxid vorbeladenes Methanolwaschmittel in die Waschsektion S1 weitergeleitet, wo es aufgrund seines Mengenstroms vorwiegend Schwefelkomponenten aus dem Syntheserohgas absorbiert, bevor es mit Kohlendioxid und Schwefelkomponenten beladen aus dem Sumpfraum der Kolonne A abgezogen und über Leitung 6 weitergeführt wird. Vom Kopf der Absorberkolonne kann ein weitgehend aus Wasserstoff und Kohlenmonoxid bestehendes Gas 7 abgezogen werden, das nach Anwärmung gegen das Syntheserohgas 1 als Synthesegasprodukt 8 abgegeben wird.

Die beladenen Methanolströme 4 und 6 werden über die Drosselorgane c und d in den Abscheider D1 bzw. D2 entspannt. Die hierbei gebildeten Gasphasen, die vorwiegend aus bei der Gaswäsche co-absorbiertem Wasserstoff und Kohlenmonoxid bestehen, werden über die Leitungen 9 bzw. 10 und 11 sowie den Verdichter V1 in das Syntheserohgas 1 zurückgeführt. Um gelöstes Kohlendioxid in die Gasphase zu überführen, wird das beladene Methanol 12 aus dem Abscheider D2 abgezogen und über das Drosselorgan e in den Mittelteil der typischerweise zwischen 3 und 4,5bar betriebenen Mitteldruckkolonne M entspannt. Bei der Entspannung ebenfalls freigesetzte Schwefelkomponenten werden mit einem Teil 13 des schwefelfreien, vorwiegend mit Kohlendioxid beladenen Methanolstroms 14 rückgewaschen, der hierzu über das Drosselorgan f in den Kopf der Mitteldruckkolonne M entspannt wird. Aus der Mitteldruckkolonne M kann daher ein weitgehend schwefelfreier Kohlendioxidstrom 15 abgezogen werden, der nach Anwärmung gegen das Syntheserohgas 1 als ein erstes Kohlendioxidprodukt 16 abgegeben wird. Im Kaminboden K2 der Mitteldruckkolonne M sammelt sich ein vorwiegend mit Schwefelkomponenten beladenes, Kohlendioxid enthaltendes Methanol, das über Leitung 17 abgezogen und über das Drosselorgan g in den Mittelteil der Waschkolonne W entspannt wird. Zur Rückwaschung von Schwefelkomponenten wird am Kopf der Waschkolonne W der zweite Teil 18 des schwefelfreien, vorwiegend mit Kohlendioxid beladenen Methanolstroms 14 über das Drosselorgan h eingeleitet. Mit Hilfe der Pumpe P wird aus dem Kaminboden K3 der Waschkolonne W ein an Schwefelkomponenten reiches, jedoch immer noch Kohlendioxid enthaltendes Methanol über Leitung 19 abgezogen und in den Sumpfraum der Mitteldruckkolonne M eingeleitet, nachdem es in den Wärmetauschern E2 und E3 gegen regeneriertes 3 bzw. beladenes Methanol 4 angewärmt wurde. Durch die Anwärmung wird ein Teil des enthaltenen Kohlendioxids aus dem Methanol ausgetrieben, welches bei höherem Druck über Kopf der Mitteldruckkolonne M mit dem Strom 15 abgegeben wird. Das weiterhin mit Schwefel und Resten an Kohlendioxid beladene Waschmittel wird über Leitung 20 aus dem Sumpfraum der Mitteldruckkolonne M abgezogen und über das Drosselorgan i in den unteren Teil der Waschkolonne W entspannt, wobei ein weiterer Teil des gelösten Kohlendioxids freigesetzt wird. Nachfolgend wird das schwefelreiche Methanol 21 aus der Waschkolonne W abgezogen und über das Drosselorgan j in das Entspannungsgefäß B geführt, das mit der Waschkolonne W eine bauliche Einheit bildet. Aufgrund des hier herrschenden Druckes, der unterhalb des Atmosphärendrucks liegen kann, entsteht eine kohlendioxidreiche, Schwefelkomponenten enthaltende Gasphase sowie ein mit Schwefelkomponenten angereichertes Methanol, das stark an Kohlendioxid reduziert ist. Während das schwefelreiche Methanol über Leitung 22 einer Heißregenerierung (nicht dargestellt) zugeleitet wird, wird die kohlendioxidreiche Gasphase zur Rückwaschung der Schwefelkomponenten über Leitung 23 und den Verdichter V2 aus dem Entspannungsgefäß B abgezogen und in die Waschkolonne W zurückgeführt. Vom Kopf der Waschkolonne W wird ein Kohlendioxidstrom 24 abgezogen und nach Anwärmung gegen das Syntheserohgas 1 aufgrund seiner Reinheit als zweites Kohlendioxidprodukt 25 abgegeben. Die Kohlendioxidprodukte 16 und 25 werden einer Verdichtereinheit (nicht dargestellt) zugeführt und können beispielsweise für Enhanced Oil Recovery genutzt werden.

## Patentansprüche

1. Verfahren zur Regenerierung eines Waschmittels, das bei erhöhtem Druck in einer physikalischen Gaswäsche zur Reinigung eines Wasserstoff und Kohlenmonoxid enthaltenden Einsatzgases eingesetzt und dabei mit Kohlendioxid und Schwefelkomponenten beladen wird, **dadurch gekennzeichnet, dass** mit Kohlendioxid und Schwefelkomponenten beladenes Waschmittel auf einen Druck zwischen 0,4 und 1,7bar(a), bevorzugt zwischen 1,0 und 1,3bar(a) entspannt und bei der Entspannung freigesetztes kohlendioxidreiches, Schwefelkomponenten enthaltendes Gas verdichtet und in eine Waschkolonne eingeleitet wird, in der Schwefelkomponenten aus dem kohlendioxidreichen Gas mit Hilfe von schwefelfreiem Waschmittel ausgewaschen werden.

2. Verfahren nach Anspruch 1, **dadurch gekennzeichnet, dass** die Druckabsenkung in mehr als einem Schritt durchgeführt wird, wobei zumindest zwei kohlendioxidreiche Gasgemische auf unterschiedlichen Druckniveaus erzeugt werden.

3. Verfahren nach einem der Ansprüche 1 oder 2, **dadurch gekennzeichnet, dass** kohlendioxidreiches Gasgemisch nach seiner Verdichtung gekühlt wird.

4. Verfahren nach einem der Ansprüche 1 bis 3, **dadurch gekennzeichnet, dass** als Waschmittel Methanol eingesetzt wird.

5. Vorrichtung zur Regenerierung eines Waschmittels, das bei erhöhtem Druck in einer physikalischen Gaswäsche zur Reinigung eines Wasserstoff und Kohlenmonoxid enthaltenden Einsatzgases eingesetzt und dabei mit Kohlendioxid und Schwefelkomponenten beladen wird, **dadurch gekennzeichnet, dass** sie ein Entspannungsgefäß und eine Waschkolonne umfasst, die beide über einen Verdichter verbunden sind, wodurch beladenes Waschmittel in das Entspannungsgefäß entspannbar ist und bei der Entspannung freigesetztes Gas mit Hilfe des Verdichters verdichtet und in die Waschkolonne eingeleitet werden kann.

6. Vorrichtung nach Anspruch 5, **dadurch gekennzeichnet, dass** sie einen zwischen Verdichter und Waschkolonne angeordneten Wärmetauscher aufweist, über den verdichtetes Gas vor seiner Einleitung in die Waschkolonne gekühlt werden kann.

7. Vorrichtung nach einem der Ansprüche 5 oder 6, **dadurch gekennzeichnet, dass** sie wenigstens zwei seriell angeordnete Entspannungsgefäße aufweist, wobei jeweils zwei benachbarte Entspannungsgefäße über ein Drosselorgan miteinander verbunden sind, so dass beladenes Waschmittel durch die Entspannungsgefäße geführt und dabei auf unterschiedliche Druckniveaus entspannt werden kann.

8. Vorrichtung nach einem der Ansprüche 5 bis 7, **dadurch gekennzeichnet, dass** die Anzahl der Verdichtersektionen des Verdichters gleich oder größer ist als die Anzahl der Entspannungsgefäße.

9. Vorrichtung nach Anspruch 8, **dadurch gekennzeichnet, dass** die Eintrittseite einer Verdichtersektion höchstens mit einem Entspannungsgefäß verbunden ist.

10. Vorrichtung nach einem der Ansprüche 5 bis 9, **dadurch gekennzeichnet, dass** die Waschkolonne und das oder die Entspannungsgefäße als separate Bauteile oder als bauliche Einheit ausgeführt sind.
